# EUROPÄISCHE PATENTSCHRIFT

(11) **EP 1 656 011 B1**
(45) Veröffentlichungstag und Bekanntmachung des Hinweises auf die Patenterteilung: **10.02.2010**
(21) Anmeldenummer: 04763808.5
(22) Anmeldetag: 05.08.2004
(51) Int. Cl.: A01G 29/00

(54) **WASSERSPEICHERMATERIAL**
WATER ACCUMULATING MATERIAL
MATIERE ABSORBANT L'EAU

(30) Priorität: 21.08.2003 DE 10339178
(43) Veröffentlichungstag der Anmeldung: 17.05.2006
(73) Patentinhaber: GELITA AG, 69412 Eberbach (DE)
(72) Erfinder: AHLERS, Michael, 69412 Eberbach (DE); FISCHER, Brigitte, 53639 Königswinter (DE)
(74) Vertreter: Hoeger, Stellrecht & Partner Patentanwälte
(86) Internationale Anmeldenummer: PCT/EP2004/008762
(87) Internationale Veröffentlichungsnummer: WO 2005/020671

(56) Entgegenhaltungen:
- EP-B- 0 230 799
- DE-A- 10 116 442
- DE-A- 19 531 282
- FR-A- 2 776 955
- US-A- 5 842 309
- US-A- 6 140 550
- PATENT ABSTRACTS OF JAPAN Bd. 1995, Nr. 06, 31. Juli 1995 (1995-07-31) & JP 07 082400 A (ACHILLES CORP), 28. März 1995 (1995-03-28)

## Beschreibung

Die Erfindung betrifft ein Wasserspeichermaterial zur Langzeitwasserversorgung von Pflanzen.

In der DE 44 27 292 A1 wird vorgeschlagen durch Einlegen von Naturschwamm in den Wurzelbereich der Pflanzen einen Wasserspeicher vorzusehen, der das Anwuchsergebnis verbessert und Gießvorgänge einsparen kann. Der Wasserspeichereffekt ist hier allerdings sehr begrenzt.

Ähnliches gilt auch für die hauptsächlich aus Kompost gefertigten Wasserspeichermassen, wie sie in der DE 1 99 20 641 A1 beschrieben sind. Insbesondere verlieren diese Materialien beim Einbau in den Wurzelbereich der Pflanzen unter dem dann auf den Wasserspeichermaterial lastenden Druck einen erheblichen Teil ihrer von vorneherein schon begrenzten Wasserspeicherkapazität. Ferner sind solche Materialien aufgrund der letztlich nicht kontrollierbaren Herkunft des Hauptbestandteils Kompost nicht selten schadstoffbelastet.

In der EP 0 230 799 B1 wird ein Kulturträger enthaltend eine Haltefolie aus Zellstoffwatte mit darauf angeordneten superabsorbierenden Teilchen beschrieben.

Sogenannte Superabsorber basierend auf Polyacrylaten, Polyacrylamiden, Polyvinylaminen sowie deren Derivaten, die unter Wasseraufnahme Gele bilden können, die ein Vielfaches des Eigengewichtes an Wasser aufnehmen, sind hervorragend geeignete Wasserabsorber. Dies resultiert zum einen Teil aus der genannten großen Wasseraufnahmekapazität, zum anderen aber auch daraus, dass das gespeicherte Wasser auch bei hohem Druck auf die Absorberpartikel gehalten und nicht freigesetzt wird. Damit parallel geht die Eigenschaft auch bei hoher Druckbelastung noch Wasser aufnehmen zu können. Diese partikelförmigen, meist granularen Wasserabsorber nehmen bei einem Überangebot von Flüssigkeit die Flüssigkeit auf und binden diese und sind in der Lage, das Wasser bei abtrocknender Umgebung wieder an diese abzugeben.

Von einem der Hersteller von sogenannten Superabsorbern (z.B. Luquasorb^{®} der BASF AG) wird empfohlen, das in Großgebinden gelieferte Granulat in einer Dosierung von 2 bis 50 g/m² in das Erdreich einzuarbeiten. Dadurch soll die Widerstandskraft der Pflanzen gegen Unterbewässerung und Trockenheit erheblich erhöht und die Anzahl der notwendigen Bewässerungen stark verringert werden bei gleichzeitig vermindertem Wasserverbrauch.

Als weitere Vorteile der Einarbeitung der Superabsorbergranulate in das Erdreich werden die Lockerung der Erde durch das Aufweiten oder Schrumpfen der Granulatpartikel bei der Wasseraufnahme bzw. Abgabe beschrieben. Als Zusatzeffekt wird eine bessere Belüftung der Wurzeln beschrieben.

So positiv diese Effekte der Superabsorber sind, so schwierig ist letztlich deren Einsatz in der Praxis.

Insbesondere die Dosierung bereitet beim Verarbeiten der Granulate durch den Gärtner Probleme. Eine lokale Überdosierung kann zu einem Anheben und im schlimmsten Fall sogar zum Umkippen von Pflanzen führen, hervorgerufen durch die starke Volumenvergrößerung der Superabsorbergranulatpartikel bei Wasseraufnahme. Ferner können sich Granulatpartikelagglomerate bilden, die die Wasserspeicherkapazität durch Verblocken der Partikel vermindern.

Dem Dosierungsproblem wurde bisher dadurch begegnet, dass man den partikelförmigen Superabsorber in loser Form in gut durchlässigen Vliesstoffbeuteln zum Einlegen in den Wurzelbereich von Pflanzen angeboten hat. Diese sind jedoch allenfalls kleinflächig sinnvoll zu verwenden. Die Versorgung von Rasenflächen ist damit nicht denkbar.

Die Aufgabe der vorliegenden Erfindung ist es, ein Wasserspeichermaterial vorzuschlagen mit dem ein Maximum an Wasserspeicherkapazität bezogen auf eingesetzte Wasserabsorber erzielbar und welches einfach dosierbar und auch großflächig anwendbar ist.

Diese Aufgabe wird erfindungsgemäß dadurch gelöst, dass das eingangs beschriebene Wasserspeichermaterial ein flächiges biologisch abbaubares Trägermaterial und einen partikelförmigen Wasserabsorber umfasst, wobei die Partikel des Wasserabsorbers auf dem Trägermaterial gleichmäßig verteilt fixiert sind und das Trägermaterial Polypeptide und/oder Polyvinylalkohol umfasst.

Bei dem erfindungsgemäßen Wasserspeichermaterial sorgt die Fixierung der Wasserabsorberpartikel in gleichmäßiger Verteilung auf dem Trägermaterial dafür, dass jeder Partikel für die Wasserspeicherfunktion voll zur Verfügung steht und ein Verklumpen der Partikel sicher vermieden wird. Das Trägermaterial hat hier zunächst die primäre Funktion die Partikel gleichmäßig auf einer Fläche verteilt zu halten.

Die Fixierung kann zum einen so erfolgen, dass ein vorzugsweise ebenfalls biologisch abbaubares Klebemittel auf das Trägermaterial aufgetragen und dann die Wasserabsorberpartikel aufgestreut werden.

Alternativ kann das Trägermaterial ein Klebemittel beinhalten, welches vor dem Aufbringen der Wasserabsorberpartikel aktiviert wird, oder selbst als Klebemittel aktivierbar sein.

Die Klebemittel werden bevorzugt so angewendet, dass sie den Zutritt von Wasser zu den Partikeln leicht ermöglichen, d.h. die Klebemittel sollen die Wasserabsorberpartikel nicht gänzlich umhüllen oder zumindest so wasserdurchlässig sein, dass angebotenes Wasser von den Wasserabsorberpartikeln momentan aufgenommen werden kann. Dies ist besonders einfach zu bewerkstelligen, wenn das Trägermaterial das Klebemittel bereits beinhaltet.

Der Vorgang der Wasseraufnahme und der späteren Abgabe des gespeicherten Wassers an die trockene Umgebung kann praktisch beliebig oft erfolgen, insbesondere wenn die eingangs beschriebenen sogenannten Superabsorber als Wasserabsorber zum Einsatz gelangen.

Bevorzugt wird ein Klebemittel verwendet, welches wasserquellbar ist, sodass dieses selbst noch die Wasseraufnahme und Wasserspeicherkapazität des Wasserspeichermaterials erhöht. Dieser Teil der Wasserspeicherkapazität verliert sich natürlich mit der Zeit auf Grund des gewünschten biologischen Abbaus des Klebemittels.

Die erfindungsgemäß zu verwendenden Klebemittel können durchaus wasserlöslich sein, denn in der Regel haben die Klebemittel ihre Funktion erfüllt, wenn das Wasserspeichermaterial im Erdreich im Wurzelbereich der Pflanzen verbaut ist, denn dann werden die partikelförmigen Wasserabsorber durch das Erdreich ausreichend von einander auf Abstand gehalten.

Unter vorstehenden Gesichtspunkten geeignete Klebemittel sind Polypeptide, ganz besonders bevorzugt ist Collagenhydrolysat.

Hierbei wird insbesondere Collagenhydrolysat mit einem mittleren Molekulargewicht *M̅*_{w} im Bereich von 1.000 bis 20.000 Dalton, insbesondere 3.000 bis 15.000 Dalton.

Das Trägermaterial selbst wird aus einem biokompatiblen, insbesondere ebenfalls biologisch abbaubaren Material ausgewählt, und umfasst Polypeptide oder Polyvinylalkohol. Insbesondere lassen sich hierfür Biopolymere wie z.B. Kollagene, Gelatine, einsetzen. Vorstehende Materialien können alleine oder in Abmischungen zum Einsatz gelangen.

Diese Polymere haben den zusätzlichen Vorteil, dass auch sie sich im Laufe der Zeit biologisch abbauen lassen, sodass das erfindungsgemäße Wasserspeichermaterial insgesamt später im Erdreich verbleiben kann, oder aber mit dem umgebenden Erdreich kompostiert werden kann.

Das erfindungsgemäß verwendete Trägermaterial wird bevorzugt als flexibles Material ausgebildet, sodass dieses beispielsweise auch um Wurzelballen von zum Verkauf kommenden Pflanzen gewickelt werden kann, um den Wurzelballen über längere Zeiträume, beispielsweise beim Transport, feucht zu halten.

Bevorzugt werden Wasserspeichermaterialien, die auch im trockenen Zustand eine ausreichende Flexibilität aufweisen und sich in die gewünschte Form bringen lassen, z.B. bei Anlagerung an Wurzelballen. Deshalb sind als Trägermaterialien flexible Folien und Schaumplatten bevorzugt.

Falls das bioabbaubare Material des Trägers keine inhärente Flexibilität aufweist, können Weichmacher zugesetzt werden.

Empfehlenswert sind z.B. niedermolekulare Weichmacher wie Lecithine, Fette, Fettsäuren, Glycerin, Di- und Triglycerin, Sorbitole. Daneben empfehlen sich insbesondere feuchtigkeitsbindende Polymere, da Wasser häufig der beste Weichmacher für Biopolymere ist: Polyglycerin, Polyoxyalkylene, Polyoxyalkylen-ester, Polyvinylalkohole, PVP, PVFm, PVAm, Sorbitanester, Cellulose-Derivate wie CMC.

Weiter bevorzugt wird das Trägermaterial selbst mit einer Wasserspeicherkapazität ausgerüstet, d.h. es wird vorzugsweise geschäumtes Material verwendet, wobei hier insbesondere offenporiges, geschäumtes Material zum Einsatz kommt.

Bei dem geschäumten Material empfehlen sich Trockendichten von 5 bis 50 mg/cm³. Solche Materialien lassen sich einerseits noch mit für die Handhabung ausreichend hohen mechanischen Festigkeitswerten herstellen, während andererseits das Gewicht des Trägermaterials selbst minimal bleibt.

Das Trägermaterial kann auch in Form einer Vliesstruktur oder aber als Netzwerkstruktur ausgebildet sein, sodass bei der vergrößerten Oberfläche des Trägermaterials eine erhöhte Zahl von Partikeln des Wasserabsorbers mit dem Klebemittel gebunden werden kann.

Bei einer weiteren Variante des erfindungsgemäßen Wasserspeichermaterials wird zusätzlich zu den Partikeln des Wasserabsorbers noch Düngemittel in Partikelform auf dem Trägermaterial gleichmäßig verteilt fixiert. Für die Fixierung der Düngemittelpartikel gelten dieselben Ausführungen wie für die Fixierung der Absorberpartikel.

Auch hier zahlt sich wieder die gleichmäßige Verteilung der Düngemittelpartikel auf dem Trägermaterial aus, da dies eine gleichmäßige Versorgung des Erdreiches mit Düngerstoffen gewährleistet.

Die erfindungsgemäßen Wasserspeichermaterialien eignen sich insbesondere als Wasserspeicher für Pflanzen, insbesondere solche, die in Pflanzgefäßen eingepflanzt sind und können so für eine gleichmäßige Durchfeuchtung des Bodens sorgen. Auf Grund der erfindungsgemäß auf einem Trägermaterial verteilten fixierten partikelförmigen Wasserabsorbern steht die volle Kapazität der Wasserabsorber für den Wasserspeichereffekt zur Verfügung, da ein Verklumpen der Wasserabsorberpartikel hier nicht vorkommen kann. Vielmehr sind alle für die Wasserspeicherfunktion voll verfügbar. Das gleiche gilt für Düngemittelpartikel, die ebenfalls auf dem Trägermaterial verteilt fixiert werden können.

Werden bestimmte Strukturen des Trägermaterials verwendet, wie z.B. eine grobe Netzstruktur, dann vergrößert sich die Oberfläche, auf der die Wasserabsorberpartikel aufgeklebt werden können, gegebenenfalls kombiniert mit Düngemittelpartikeln.

Über die Wasserspeicherfunktion des Trägermateriales selber lässt sich noch ein weiterer Wasserspeichereffekt erzielen, wobei hier durchaus Wasserspeichermaterialien zum Einsatz kommen können, die nicht unbedingt das Wasser auch auf Druck beibehalten müssen, sprich z.B. geschäumte, insbesondere auch offenporige Materialien, wie aufgeschäumte Polypeptide oder PVA.

Die Trägermaterialien können so ausgewählt werden, dass sie selbst ein Klebemittel beinhalten oder sogar selbst als Klebemittel aktivierbar sind. So lässt sich z.B. Gelatine als Trägermaterial durch bloßes Benetzen mit Wasser als Klebemittel aktivieren, sodass ohne Weiteres die Wasserabsorberpartikel auf dem flächigen Trägermaterial verteilt aufgebracht werden können und dort direkt von der benetzten Gelatine fixiert werden.

Vorstellbar ist auch ein Trägermaterial aus einem relativ grobporigen, offenporigen Schaum, bei dem die Partikel des Wasserabsorbers nicht nur auf der makroskopischen Oberfläche aufgeklebt sind, sondern sie Partikel auch in die offenen Poren der Schaumstruktur eingelagert und dort mittels dem Klebemittel fixiert sind.
Besonders solche Wasserspeichermaterialien, die permanent im Erdreich verbleiben sollen, werden durchwurzelungsfähig ausgebildet.

Diese und weitere Vorteile der Erfindung werden im folgenden an Hand der Zeichnungen noch näher erläutert. Es zeigen im einzelnen:
- Figur 1:: Eine perspektivische Darstellung eines erfindungsgemäßen Wasserspeichermaterials;
- Figur 2:: eine Detailansicht eines Randbereichs des Materials der Figur 1; und
- Figur 3:: eine weitere Ausführungsform des erfindungsgemäßen Wasserspeichermaterials.

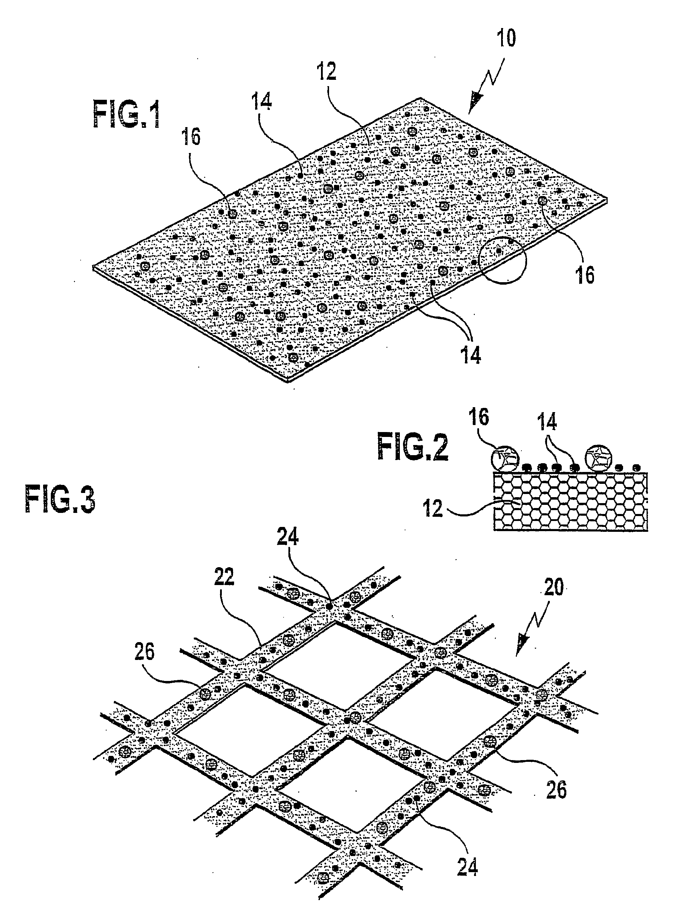

Figur 1 zeigt ein insgesamt mit dem Bezugszeichen 10 versehenes Wasserspeichermaterial mit einem flächigem Trägermaterial 12, insbesondere aus einem geschäumten Polypeptid, welches auf seiner Oberseite eine Vielzahl von gleichmäßig verteilten Partikeln 14 eines Wasserabsorbers enthält. Hierbei sind die Partikel des Wasserabsorbers über ein Klebemittel, hier insbesondere ein Kollagenhydrolysat mit einem mittleren Molekulargewicht im Bereich von 3.000 bis 15.000 Dalton aufgeklebt. Mit aufgeklebt sein können Düngemittelpartikel 16.

Das Trägermaterial 12 ist wie in Figur 2 gezeigt ein geschäumtes Polypeptid und hat so zusätzlich zu der Wasserspeicherkapazität der Superabsorberkörner 14 eine eigene zusätzliche Wasserspeicherfunktion.

Figur 3 zeigt eine andere Variante des erfindungsgemäßen Wasserspeichermaterials, welches hier insgesamt mit dem Bezugszeichen 20 versehen ist. Hier umfasst das Wasserspeichermaterial 20 ein flächiges Trägermaterial 22 in Form eines zweidimensionalen Netzes, wobei die die Netzstruktur mit rechteckigen Maschen, oder aber selbstverständlich mit beliebigen anderen Maschenstrukturen gefertigt sein kann.

Auf der Oberfläche der einzelnen Stege zwischen den einzelnen Knotenpunkten der Netzstruktur des flächigen Trägermaterials 22 sind Partikel 24 eines Superabsorbers aufgeklebt, wobei als Klebemittel wieder bevorzugt Kollagenhydrolysat mit einem mittleren Molekulargewicht von 3.000 bis 15.000 Dalton verwendet wird.

Die erfindungsgemäßen Wasserspeichermaterialien mit einem flächigem Trägermaterial auf dem die Wasserabsorberpartikel gleichmäßig verteilt aufgeklebt sind, haben nicht nur den Vorteil, dass die einzelnen Partikel des Wasserabsorbers mit ihrer vollständigen Kapazität zur Verfügung stehen und nicht miteinander verklumpen können, sondern das Trägermaterial kann zusätzlich noch so ausgestaltet werden, dass es eine zusätzliche Wasserspeicherfunktion erfüllt. Daneben können neben den Partikeln des Absorbers auch Düngemittelpartikel 16, 26 auf den flächigen Trägermaterialien 12, 22 aufgeklebt und damit in gleichmäßiger Verteilung fixiert werden.

Verwendet man ein Trägermaterial 12, 22 aus einem biologisch abbaubaren Material; wie Polypeptiden oder PVA, dann kann das gesamte Wasserspeichermaterial im Erdreich bis zu dessen Auflösung durch Abbau verbleiben bzw. zu einem beliebigen Zeitpunkt zusammen mit dem umgebenden Erdreich kompostiert werden. Für diesen Fall empfiehlt sich insbesondere Kollagenhydrolysat als Klebemittel, da dieses einem biologischen Abbau im Erdreich besonders wenig Widerstand entgegensetzt.

Die als Wasserabsorber empfohlenen Superabsorber, die in der Regel auf Polyacrylsäurepolymeren, Polyacrylamiden, Polyvinylaminen und deren Derivaten basieren, sollen eine weit höhere Resistenz gegen einen biologischen Abbau aufweisen, um den Langzeiteffekt der Wasserspeicherfunktion über den Zeitpunkt des Abbaus des Trägermaterials hinaus zu sichern. Da die vorgenannten Polymere bioverträglich sind, können diese auf Dauer im Erdreich verbleiben.

Anhand der folgenden Beispiele sei die vorliegende Erfindung in einer Reihe weiterer Aspekte noch näher erläutert:

### Beispiele:

### 1. Herstellung eines geschäumten flächigen Trägermaterials

Eine 15% Lösung einer hochbloomigen Schweineschwartengelatine wird hergestellt durch Vorquellen des Granulates in kaltem Wasser und anschließendem Lösen bei 60°C. Danach wird die Lösung auf 45°C abgekühlt und für die Herstellung eines Schaumes mittels kontinuierlicher Belüftung (Anlage: Mondomix Mini) verwendet. Bei der Pumpenleistung von 450 Upm, der Mischkopfeinstellung von 750 Upm und der Einstellung der Densität von 75 ml wird eine Nassdichte von 130 mg/cm³ erreicht. Der Schaum wird durch eine Breitschlitzdüse in eine Kastenform extrudiert. Dieser Schaumkuchen wird mit konditionierter Luft getrocknet und anschließend in Platten von 20x20x0,6 cm geschnitten. Die spezifische Dichte der Schaumplatten beträgt 25 mg/cm³.

Statt der relativ teuren, hochwertigen Schweineschwartengelatine kann ohne große Einbußen an Funktionalität auch Gelatine anderer Qualität und/oder Provenienz, z.B. Knochengelatine eingesetzt werden.

Alternativ ist ebenfalls denkbar die die Schaumbildung begünstigende Gelatine mit wesentlich preisgünstigerer Stärke abzumischen. Anteile der Stärke von 10 bis 20 Gew.% oder auch mehr behindern die Schaumbildung nicht. Vielmehr sind auch geschäumte Materialien auf reiner Stärkebasis möglich, wobei gegebenenfalls ein Gelatineanteil die Festigkeit des Trägermaterials verbessert.

Bei Trägermaterialien kollagenen Ursprungs werden Rohstoffe bevorzugt so ausgewählt, dass 10 bis 55 Gew.%, vorzugsweise 20 bis 40 Gew.% ein Molekulargewicht *M̅*_{w} < 40.000 Dalton aufweisen. Hier lässt sich die Klebemittelfunktion des kollagenen Trägermaterials durch bloßes Einwirken von Wasser aktivieren. Dies gilt selbstverständlich für geschäumte und ungeschäumte Trägermaterialien.

### Verbesserung der strukturellen Integrität des Trägermaterials im hydratisierten Zustand

Zur Verbesserung der Formstabilität, insbesondere im hydratrisierten Zustand, kann das bioabbaubare geschäumte oder ungeschäumte Trägermaterial während der Herstellung oder nachträglich vernetzt werden. Zur Vernetzung können alle geeigneten Vernetzer eingesetzt werden. Die biologische Abbaubarkeit soll hierbei erhalten bleiben. Für Proteine, wie Collagenhydrolysat, eignen sich z.B. Aldehyde, Dialdehyde, Diisocyanate, Aliphatische und aromatische Dihalogenide, reaktive Vinylverbindungen, organische Disäuren als Aktivester sowie anorganische Vernetzer und Komplexbildner, z.B. Phosphate. Eine Vernetzung gelingt auch durch thermische Dehydratation und durch UV-Bestrahlung. Dieses gilt auch, wenn das Trägermaterial als Schaumplatte vorliegt.

Je nach Grad der erwünschten Verbesserung der mechanischen Eigenschaften können z.B. Anteile von bis zu 3.000 ppm Formaldehyd verwendet werden (vgl. auch Beispiel 3).

### 2. Herstellung eines erfindungsgemäßen Wasserspeichermaterials

Die aus Beispiel 1 erhaltenen Träger- oder Schaumplatten werden mit Wasser besprüht und nach einer Zeit von 10 min., in der die wasserlöslichen Bestandteile des Kollagenhydrolysates in die wässrige Phase übergehen, mit Pulver eines Acrylat-Superabsorber bestreut (1,25 g / 100 cm²). Nach Ankleben des Adsorbers erfolgt die Trocknung. Eine Schaumplatte von 20x20x0,6 cm zeigt eine Wasseraufnahme von ca. 11. Geeignete Superabsorber sind z.B. die unter der Bezeichnung Luquasorb ® von der BASF AG angebotenen Materialien.

### Vergleich Wasserabsorptionsvermögen

| Absorber | Wasserabsorption pro Ausgangsvolumen des eingesetzten Absorbers | Wasserabsorption pro Masse |
|---|---|---|
| Blumenerde, feucht | 0,4 kg / l | 0,95 kg / kg |
| Blumenerde, trocken | 1 kg / l | 4 kg / kg |
| Wasserspeicherplatte Bsp.2 | 4,7 kg / l | 140 kg / kg |

So reicht eine der 20x20x0,6 cm³ großen Platten z.B. für eine Buxbaumpflanze mit 50 bis 100 cm an Höhe bereits vollständig aus. Eine entsprechende Menge an losen Superabsorberpartikeln von 5 g im Wurzelbereich einer solchen Pflanze gleichmäßig verteilt einzubringen gestaltet sich dagegen in der Praxis schwierig, wodurch nicht selten eine Überdosierung resultiert, die das Anwachsen der Pflanze, d.h. eine Verankerung des Wurzelwerks im Erdreich, erschwert statt fördert.

Die oben stehende Tabelle zeigt schließlich die Überlegenheit in der Wasserspeicherkapazität des erfindungsgemäßen Wasserspeichermaterials gegenüber Blumenerde.

### 3. Herstellung eines weiteren erfindungsgemäßen Wasserspeichermaterials

Analog Beispiel 1 wird eine Lösung mit 13% Gelatine, 2% Diglycerin, 0,2% Farbstoff (Eisenoxid braun) und 1.000 ppm Formaldehyd (bzgl. Gelatine) angesetzt. Die Lösung wird wie beschrieben geschäumt und dann mittels Breitschlitzdüse auf ein Transportband extrudiert. Ein 6 mm starker Gelatineschaum wird mit Superadsorber (1,25 g/100 cm²) beaufschlagt und in einem Trockentunnel getrocknet. Das erhaltene Produkt ist flexibel und lässt auch im trockenen Zustand eine Verformung zu.

Überraschenderweise wurde gefunden, dass die Zugfestigkeit eines solchen getrockneten geschäumten Trägermaterials nur geringfügig durch die Konzentration an Vernetzer beeinflusst wird. Die Stabilität wird vielmehr dominiert durch die Zellstruktur, insbesondere durch die Dicke der Zellwände. Diese lässt sich durch die Konzentration der zu schäumenden Proteinlösung einstellen. So nimmt die für den Bruch eines Prüfmusters (10x2,5x2 cm) erforderliche Kraft um den Faktor 4 zu bei Erhöhung der Proteinkonzentration in der Ausgangslösung von 10% auf 18%.

Im nassen Zustand allerdings wirkt sich die Vernetzung stabilisierend aus, ebenso wird der biologische Abbau der Materialien verlangsamt.

Die Wasserspeicherkapazität der erhaltenen Materialien entspricht im Wesentlichen der des Beispiels 2.

### 4. Wasserspeichermaterial nicht gemäß vorliegender Erfindung

Ein Schwammtuch aus regenerierter Cellulose (z.B. Haushaltstücher der Marke Vileda, Hersteller Fa. Freudenberg & Co KG) wird mit einer 5%igen Kollagenhydrolysat-Lösung mit einem mittleren *M̅*_{w} von 5.000 D besprüht mit Superadsorber (1,25 g/100 cm²) beaufschlagt und getrocknet. Auch hier wird eine Wasserspeicherkapazität vergleichbar mit der der Materialien der Beispiele 2 und 3 erhalten.

## Patentansprüche

1. Wasserspeichermaterial, umfassend ein flächiges biologisch abbaubares Trägermaterial und einen partikelförmigen Wasserabsorber, wobei die Partikel des Wasserabsorbers auf dem Trägermaterial gleichmäßig verteilt fixiert sind, **dadurch gekennzeichnet, dass** das Trägermaterial Polypeptide und/oder Polyvinylalkohol (PVA) umfasst.

2. Wasserspeichermaterial nach Anspruch 1, **dadurch gekennzeichnet, dass** die Partikel des Wasserabsorbers mittels einem biologisch abbaubaren, hydrophilen Klebemittel auf dem Trägermaterial fixiert sind.

3. Wasserspeichermaterial nach Anspruch 2, **dadurch gekennzeichnet, dass** das Klebemittel wasserquellbar ist.

4. Wasserspeichermaterial nach Anspruch 2 oder 3, **dadurch gekennzeichnet, dass** das Klebemittel wasserlöslich ist.

5. Wasserspeichermaterial nach einem der Ansprüche 2 bis 4, **dadurch gekennzeichnet, dass** das Klebemittel ein Polypeptid ist.

6. Wasserspeichermaterial nach Anspruch 5, **dadurch gekennzeichnet, dass** das Polypeptid ein Collagenhydrolysat ist.

7. Wasserspeichermaterial nach Anspruch 6, **dadurch gekennzeichnet, dass** das Collagenhydrolysat ein mittleres Molekulargewicht *M̅*_{w} von 1.000 bis 20.000 Dalton, weiter bevorzugt von 3.000 bis 15.000 Dalton aufweist.

8. Wasserspeichermaterial nach einem der voranstehenden Ansprüche, **dadurch gekennzeichnet, dass** das Trägermaterial vernetzt ist.

9. Wasserspeichermaterial nach Anspruch 8, **dadurch gekennzeichnet, dass** das Trägermaterial einen Weichmacher umfasst.

10. Wasserspeichermaterial nach einem der voranstehenden Ansprüche, **dadurch gekennzeichnet, dass** das Polypeptid Gelatine ist.

11. Wasserspeichermaterial nach einem der voranstehenden Ansprüche, **dadurch gekennzeichnet, dass** das Trägermaterial ein flexibles Trägermaterial ist.

12. Wasserspeichermaterial nach einem der voranstehenden Ansprüche, **dadurch gekennzeichnet, dass** das Trägermaterial ein geschäumtes Trägermaterial ist und insbesondere eine offenzellige Porenstruktur aufweist.

13. Wasserspeichermaterial nach einem der Ansprüche 1 bis 11, **dadurch gekennzeichnet, dass** das Trägermaterial eine Vliesstruktur aufweist.

14. Wasserspeichermaterial nach einem der Ansprüche 1 bis 11, **dadurch gekennzeichnet, dass** das Trägermaterial eine Netzstruktur aufweist.

15. Wasserspeichermaterial nach einem der Ansprüche 2 bis 14, **dadurch gekennzeichnet, dass** das Trägermaterial das Klebemittel umfasst.

16. Wasserspeichermaterial nach Anspruch 15, **dadurch gekennzeichnet, dass** das Klebemittel ein mit Wasser aktivierbares Klebemittel ist.

17. Wasserspeichermaterial nach einem der voranstehenden Ansprüche, **dadurch gekennzeichnet, dass** auf dem Trägermaterial zusätzlich ein partikelförmiges Düngemittel gleichmäßig verteilt fixiert ist.

18. Wasserspeichermaterial nach einem der voranstehenden Ansprüche, **dadurch gekennzeichnet, dass** das Wasserabsorbermaterial ein Superabsorbermaterial umfasst.

19. Wasserspeichermaterial nach Anspruch 18, **dadurch gekennzeichnet, dass** das Superabsorbermaterial ausgewählt ist aus Polyacrylsäuren, Polyacrylaminen, Polyvinylaminen und deren Derivaten.

20. Wasserspeichermaterial nach einem der voranstehenden Ansprüche, **dadurch gekennzeichnet, dass** das Material durchwurzelungsfähig ist.

## Claims

1. A water-storage material, comprising a flat biodegradable carrier material and a particulate water absorber, the particles of said water absorber being fixed in position on the carrier material in an evenly distributed fashion, **characterized in that** the carrier material comprises polypeptides and/or polyvinyl alcohol (PVA).

2. The water-storage material as defined in claim 1, **characterized in that** said particles of said water absorber are fixed on said carrier material by means of a biodegradable, hydrophilic adhesive agent.

3. The water-storage material as defined in claim 2, **characterized in that** said adhesive agent is water-swellable.

4. The water-storage material as defined in claim 2 or claim 3, **characterized in that** said adhesive agent is water-soluble.

5. The water-storage material as defined in any one of claims 2 to 4, **characterized in that** said adhesive agent is a polypeptide.

6. The water-storage material as defined in claim 5, **characterized in that** said polypeptide is a collagen hydrolysate.

7. The water-storage material as defined in claim 6, **characterized in that** said collagen hydrolysate has an average molecular weight *M̅*_{w} of from 1,000 to 20,000 Dalton, preferably from 3,000 to 15,000 Dalton.

8. The water-storage material as defined in any one of the preceding claims, **characterized in that** said carrier material is crosslinked.

9. The water-storage material as defined in claim 8, **characterized in that** said carrier material comprises a plasticizer.

10. The water-storage material as defined in any one of the preceding claims, **characterized in that** said polypeptide is gelatin.

11. The water-storage material as defined in any one of the preceding claims, **characterized in that** said carrier material is a flexible carrier material.

12. The water-storage material as defined in any one of the preceding claims, **characterized in that** said carrier material is an expanded carrier material and preferably exhibits an open-cell pore structure.

13. The water-storage material as defined in any one of claims 1 to 11, **characterized in that** said carrier material shows a non-woven structure.

14. The water-storage material as defined in any one of claims 1 to 11, **characterized in that** said carrier material shows a network structure.

15. The water-storage material as defined in any one of claims 2 to 14, **characterized in that** said carrier material comprises said adhesive agent.

16. The water-storage material as defined in claim 15, **characterized in that** said adhesive agent is one which is capable of being activated by water.

17. The water-storage material as defined in any one of the preceding claims, **characterized in that** a particulate fertilizer is additionally bonded to said carrier material in an evenly distributed fashion.

18. The water-storage material as defined in any one of the preceding claims, **characterized in that** said water absorber material comprises a superabsorber material.

19. The water-storage material as defined in claim 18, **characterized in that** said superabsorber material is selected from the group comprising polyacrylic acids, polyacryl amines, polyvinyl amines, and derivatives thereof.

20. The water-storage material as defined in any one of the preceding claims, **characterized in that** said material is suitable for breakthrough of roots.

## Revendications

1. Matériau accumulant l'eau, comprenant un matériau support biodégradable en nappe et un produit absorbant l'eau sous forme de particules, où les particules du produit absorbant l'eau sont fixées sur le matériau support en étant réparties uniformément, **caractérisé en ce que** le matériau support comprend des polypeptides et/ou du poly(alcool vinylique) (PVA).

2. Matériau accumulant l'eau selon la revendication 1, **caractérisé en ce que** les particules du produit absorbant l'eau sont fixées sur le matériau support au moyen d'un adhésif hydrophile biodégradable.

3. Matériau accumulant l'eau selon la revendication 2, **caractérisé en ce que** l'adhésif peut gonfler à l'eau.

4. Matériau accumulant l'eau selon la revendication 2 ou 3, **caractérisé en ce que** l'adhésif est soluble dans l'eau.

5. Matériau accumulant l'eau selon l'une des revendications 2 à 4, **caractérisé en ce que** l'adhésif est un polypeptide.

6. Matériau accumulant l'eau selon la revendication 5, **caractérisé en ce que** le polypeptide est un hydrolysat de collagène.

7. Matériau accumulant l'eau selon la revendication 6, **caractérisé en ce que** l'hydrolysat de collagène présente une masse moléculaire moyenne *M̅ₚ* de 1 000 à 20 000 dalton, de préférence encore de 3 000 à 15 000 Dalton.

8. Matériau accumulant l'eau selon l'une des revendications précédentes, **caractérisé en ce que** le matériau support est réticulé.

9. Matériau accumulant l'eau selon la revendication 8, **caractérisé en ce que** le matériau support comprend un plastifiant.

10. Matériau accumulant l'eau selon l'une des revendications précédentes, **caractérisé en ce que** le polypeptide est la gélatine.

11. Matériau accumulant l'eau selon l'une des revendications précédentes, **caractérisé en ce que** le matériau support est un matériau support flexible.

12. Matériau accumulant l'eau selon l'une des revendications précédentes, **caractérisé en ce que** le matériau support est un matériau support expansé et présente en particulier une structure poreuse à alvéoles ouverts.

13. Matériau accumulant l'eau selon l'une des revendications 1 à 11, **caractérisé en ce que** le matériau support présente une structure de non tissé.

14. Matériau accumulant l'eau selon l'une des revendications 1 à 11, **caractérisé en ce que** le matériau support présente une structure réticulée.

15. Matériau accumulant l'eau selon l'une des revendications 2 à 14, **caractérisé en ce que** le matériau support comprend l'adhésif.

16. Matériau accumulant l'eau selon la revendication 15, **caractérisé en ce que** l'adhésif est un adhésif activable avec l'eau.

17. Matériau accumulant l'eau selon l'une des revendications précédentes, **caractérisé en ce qu'**un engrais sous forme de particules est fixé en outre sur le matériau support en étant réparti uniformément.

18. Matériau accumulant l'eau selon l'une des revendications précédentes, **caractérisé en ce que** le matériau absorbant l'eau comprend un matériau superabsorbant.

19. Matériau accumulant l'eau selon la revendication 18, **caractérisé en ce que** le matériau superabsorbant est choisi parmi les poly(acide acryliques), les polyacrylamines, les polyvinylamines et leurs dérivés.

20. Matériau accumulant l'eau selon l'une des revendications précédentes, **caractérisé en ce que** le matériau est capable d'enracinement.
